# EUROPÄISCHE PATENTSCHRIFT

(11) **EP 2 150 125 B1**
(45) Veröffentlichungstag und Bekanntmachung des Hinweises auf die Patenterteilung: **10.10.2018**
(21) Anmeldenummer: 08733251.6
(22) Anmeldetag: 23.04.2008
(51) Int. Cl.: A23L 21/00, A23P 20/10, A23P 20/15

(54) **TEILCHENFORMIGE LEBENSMITTELKOMPONENTE**
PARTICULATE FOOD CONSTITUENT
CONSTITUANT ALIMENTAIRE SOUS FORME DE PARTICULE

(30) Priorität: 23.04.2007 AT 6302007
(43) Veröffentlichungstag der Anmeldung: 10.02.2010
(73) Patentinhaber: Agrana Beteiligungs- Aktiengesellschaft, 1020 Wien (AT)
(72) Erfinder: EGGENREICH, Karin, A-8160 Weiz (AT); HARIOT, Frederic, F-75010 Paris (FR); ULREICH, Martin, A-7423 Pinkafeld (AT)
(74) Vertreter: Pawloy, Peter Michael
(86) Internationale Anmeldenummer: PCT/AT2008/000148
(87) Internationale Veröffentlichungsnummer: WO 2008/128271

(56) Entgegenhaltungen:
- EP-A1- 0 776 609
- EP-A2- 0 166 446
- AT-B- 366 239
- DE-A1- 2 433 903
- DE-A1- 3 913 824
- DE-A1- 10 345 933
- DE-C- 460 888
- DE-C- 461 794
- DE-T2- 69 906 401
- US-A1- 2004 131 730
- US-B1- 6 528 104
- Anonymous: "Pure Pleasures Mini Cups Ice Cream Product Description", GNPD database, 30 November 2003 (2003-11-30), pages 1-3, XP055391947, Retrieved from the Internet: URL:http://www.gnpd.com/sinatra/recordpage /241134/from_search/igM7qLe5QZ/?page=1 [retrieved on 2017-07-18]

## Beschreibung

Die vorliegende Erfindung betrifft eine teilchenförmige Lebensmittelkomponente, die insbesondere zum Einmischen in ein Milcherzeugnis, wie z.B. Joghurt oder Topfencrémen, geeignet ist.

Es ist bekannt, in Lebensmittel, insbesondere Milcherzeugnissen, teilchenförmige Lebensmittelkomponenten, z.B. Getreidepartikel oder Schokoladepartikel, zur Verbesserung des Geschmacks oder auch zur Veränderung der Textur (durch Verwendung "knackiger" Partikel) beizumischen.

Aus der GB 1,120, 956 sind gefriergetrocknete frische Früchte oder Fruchtpürees bekannt, die auch als Bestandteil eines Lebensmittels, z.B. eines Schokoladeriegels, eingesetzt werden können.

Die JP-A 2004-357647 beschreibt die Umhüllung von Rohfrüchten mit Schokolade. Auch die JP-A 2006-141230 geht von rohen Früchten (Ume-Früchten) aus, die mit verschiedenen Komponenten (Likör, Schokolade) umhüllt werden.

Die SU 1729396 sowie die RU 2067838 beschreiben die Umhüllung von Fruchtpürees u.a. mit einer Schokoladeschicht. Die als Ausgangsprodukt verwendeten Fruchtpürees sind gelförmig, d.h. bei Raumtemperatur nicht fließfähig.

Alle genannten Druckschriften beschreiben somit Lebensmittelkomponenten, deren Füllung (Früchte oder Fruchtpürees) beim Genuss in fester Form vorliegen.

Weitere Verfahren zur Umhüllung von Partikeln, z.B. Lebensmittelkomponenten, sind in der US 2004/131730 A1 und der GB 2,186,542 beschrieben.

Die US 6,528,104 B1 beschreibt eine aromatisierte Füllung mit einer geringen Wasseraktivität.

Aus der DE 103 45 933 A1 ist eine Düse zum Dosieren gefüllter Süßwaren in eine Gießform bekannt.

Die DE 699 06 401 T2 beschreibt die Herstellung pasteurisierter, teilchenförmiger und umhüllter Lebensmittelkomponenten.

Gemäß der vorliegenden Erfindung wird eine teilchenförmige Lebensmittelkomponente mit einer Füllung und einer Umhüllung zur Verfügung gestellt, die dadurch gekennzeichnet ist, dass die Füllung eine bei Raumtemperatur fließfähige Lebensmittelzubereitung ausgewählt aus der Gruppe bestehend aus Fruchtzubereitungen, sonstigen Zubereitungen, die aus der Gruppe bestehend aus Zubereitungen von Honig, Schalenobst, Kakao, Magerkakao, Schokolade, Kaffee und Vanille ausgewählt sind, und Mischungen daraus ist, dass die Umhüllung eine Schicht bestehend aus einer Komponente ausgewählt aus der Gruppe bestehend aus lebensmitteltauglichen Kakaoerzeugnissen, Schokoladeerzeugnissen und hydrophob wirkenden Lebensmittelzutaten, insbesondere gegebenenfalls aromatisierten und/oder gefärbten lebensmitteltauglichen Fetten oder
fetthältigen Materialien mit einem Fettgehalt von 80% oder mehr, bzw. Mischungen daraus aufweist, dass der durchschnittliche Teilchendurchmesser der im wesentlichen sphärischen Lebensmittelkomponente 6 bis 18 mm, bevorzugt 8 bis 11 mm beträgt, und dass die Lebensmittelkomponente im Wesentlichen in keimfreier Form vorliegt.

Für die Zwecke der vorliegenden Erfindung bedeuten die Begriffe "Fruchtzubereitung" sowie "Sonstige Zubereitung" die im Österreichischen Lebensmittelbuch (Codex Alimentarius Austriacus) Lfg. 55, Jänner 2007, Abschnitt B 32, TK "Milchmischerzeugnisse", Anlagen I. und II. definierten Produkte.

Insbesondere ist eine in der erfindungsgemäßen Lebensmittelkomponente enthaltene Fruchtzubereitung bevorzugt aus der Gruppe bestehend aus Fruchtsäften, Fruchtsaftkonzentraten und gegebenenfalls passierten Fruchtpürees, insbesondere Bananenpüree, Waldbeerenpüree, Kokospüree, Mangopüree, passierten Erdbeeren und Mischungen daraus ausgewählt.

Die erfindungsgemäße Lebensmittelkomponente unterscheidet sich von den Produkten des Standes der Technik somit dadurch, dass die enthaltene Füllung (Fruchtzubereitung oder Sonstige Zubereitung) bei Raumtemperatur fließfähig ist. Dies bewirkt einen angenehmen bzw. in Kombination mit einer festen Umhüllung auch "überraschenden" sensorischen Eindruck.

Bevorzugt weist die in der erfindungsgemäßen Lebensmittelkomponente verwendete Lebensmittelzubereitung eine Viskosität bei Raumtemperatur von 0,1 Pa.s bis 100 Pa.s auf. Die Füllung der erfindungsgemäßen Lebensmittelkomponente kann im wesentlichen aus der Lebensmittelzubereitung bestehen. Das bedeutet, dass abgesehen von der Lebensmittelzubereitung und unwesentlichen Anteilen an Hilfsstoffen, wie z.B. Pektin, keine weiteren Substanzen in der Füllung enthalten sind. Gelierende Hilfsstoffe, wie z.B. Pektin, sind nur unterhalb jener Menge enthalten, die zu einer Verfestigung der Lebensmittelzubereitung bei Raumtemperatur führen würde.

Die Umhüllung kann aus einer einzigen Schicht, insbesondere einer Schokoladeschicht, bestehen.

Alternativ dazu kann die Umhüllung zwei oder mehrere Schichten aus gegebenenfalls unterschiedlichen Komponenten aufweisen. Beispielsweise kann die Umhüllung eine innere Schicht, die im wesentlichen aus Kakaoerzeugnissen oder Schokoladeerzeugnissen besteht, und eine äußere Schicht, die im wesentlichen aus lebensmitteltauglichen Fetten oder fetthältigen Materialien besteht, aufweisen.

Die erfindungsgemäße Lebensmittelkomponente liegt in Form von im wesentlichen sphärischen Teilchen vor.

Insbesondere beim Einsatz der erfindungsgemäßen Lebensmittelkomponente in einem Milcherzeugnis ist es wichtig, dass die Lebensmittelkomponente im wesentlichen aseptisch ist.

Insbesondere sollte die Lebensmittelkomponente völlig frei von Hefe oder Schimmel sein und eine Gesamtkeimzahl von weniger als 100 Keimen/g aufweisen.

Die vorliegende Erfindung betrifft auch ein Lebensmittel, welches eine erfindungsgemäße Lebensmittelkomponente enthält.

Das Lebensmittel ist bevorzugt ausgewählt aus der Gruppe bestehend aus Milcherzeugnissen, insbesondere Joghurts, Topfencrémen, Milchreis, Pudding und Molkeprodukten.

Die Kombination einer Lebensmittelkomponente mit einer flüssigen Füllung, einer im wesentlichen harten Umhüllung (z.B. einer Schokoladeschicht) mit einem Milchprodukt aus der Gruppe der genannten Produkte führt zu einem geschmacklich und sensorisch sehr attraktiven Lebensmittel.

Zur Herstellung der erfindungsgemäßen Lebensmittelkomponente dient ein Verfahren umfassend die Schritte
a) Verformen einer bei Raumtemperatur fließfähigen Lebensmittelzubereitung zur gewünschten Form einer Füllung und
b) Überziehen der geformten Lebensmittelzubereitung mit dem Material der Umhüllung, wobei die Lebensmittelzubereitung vor dem Schritt b), gegebenenfalls gleichzeitig mit dem Schritt a), tiefgefroren wird.

Das Verformen der Lebensmittelzubereitung und das Überziehen mit dem Material der Umhüllung kann beispielsweise in einem einzigen Schritt, nach der sogenannten "One-Shot-Technologie", durchgeführt werden. Die "One-Shot-Technologie" ist eine Technologie, die es erlaubt, gefüllte Produkte in einem Gießschritt herzustellen. Die Produkte werden dabei in Formen, z.B. aus Silikon oder Polycarbonat, gegossen.

Insbesondere kann im Schritt a) die Lebensmittelzubereitung auf eine gekühlte Fläche getropft und auf der Fläche unter Verfestigung tiefgefroren werden. Es bildet sich dabei ein *in situ* geformtes, insbesondere kugelförmiges, gefrorenes Partikel, welches im weiteren Schritt b) mit dem Material der Umhüllung überzogen werden kann.

Im Schritt b) kann das Material der Umhüllung insbesondere durch eine oder mehrere der folgenden Varianten auf die geformte Lebensmittelzubereitung aufgebracht werden:
i) Aufsprühen auf die geformte Lebensmittelzubereitung
ii) Übergießen der geformten Lebensmittelzubereitung mit dem Material der Umhüllung
iii) Eintauchen der geformten Lebensmittelzubereitung in das Material der Umhüllung.

Der Schritt b) kann dabei mehrfach durchgeführt werden, entweder um mehrere Schichten unterschiedlichen Materials zu erhalten, oder aber um eine bestehende Schicht dicker zu machen. Zwischen zwei Schritten b) kann die geformte Lebensmittelzubereitung, insbesondere wenn sie in Form von gefrorenen Partikeln vorliegt, gewendet werden. Damit können im Rahmen von mehreren Aufbringungsschritten b) alle Seiten der Lebensmittelzubereitung beschichtet werden. Alternativ dazu kann das Material der Umhüllung in einem oder mehreren Schritten von mehreren Seiten (z.B. von oben und von unten) auf die Lebensmittelzubereitung aufgebracht werden.

Das Material der Umhüllung kann in einem dem Fachmann an sich bekannten, geeigneten Temperaturbereich auf die Lebensmittelzubereitung aufgebracht werden. Wird beispielsweise als Material der Umhüllung Schokolade eingesetzt, so kann die Schokolade bei Temperaturen von 25°C bis 80°C aufgebracht werden.

### Kurze Beschreibung der Figur

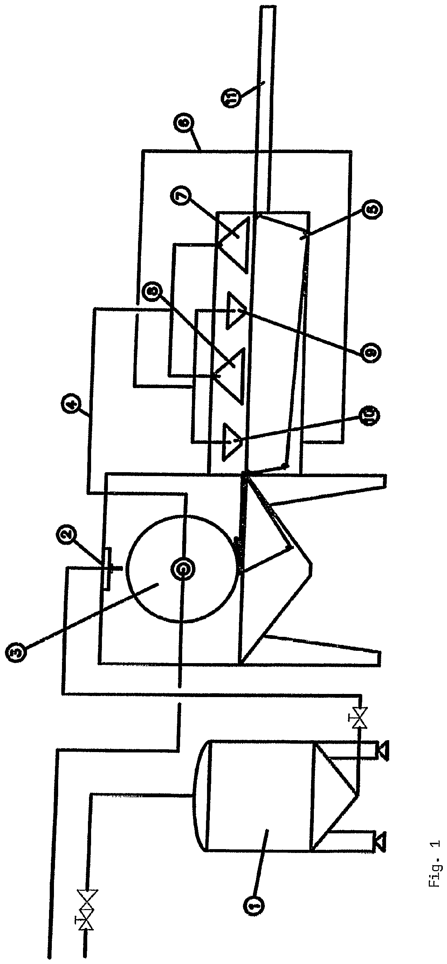

Figur 1 zeigt schematisch eine bevorzugte Vorrichtung zur Herstellung der erfindungsgemäßen Lebensmittelkomponente.

In einem Vorlagebehälter 1 wird eine Lebensmittelzubereitung zur Verfügung gestellt (z.B. eine Fruchtzubereitung). Die Lebensmittelzubereitung wird über eine Leitung der Vorrichtung 2 zugeführt, wo sie auf eine mittels Kühlleitung 4 gekühlte Trommel 3 aufgebracht wird. Die Temperatur der Trommel kann im Inneren minus 100°C und an der Oberfläche minus 50°C betragen. Durch Kontakt der Lebensmittelzubereitung mit der gekühlten Oberfläche kommt es zum Tieffrieren der bei Raumtemperatur fließfähigen Zubereitungen.

Die gefrorenen Partikel werden mittels Schaber (nicht dargestellt) von der Trommel 3 abgeschabt und auf ein Transportband 11 übergeben, welches die Partikel in eine Vorrichtung 5 zum Überziehen der Partikel mit einer Umhüllung transportiert.

In der Vorrichtung 5 werden die Partikel abwechselnd mittels Vorrichtungen 9 und 10 mit einem durch eine Leitung 6 zugeführten Umhüllungsmaterial überzogen sowie mittels Kühlvorrichtungen 7 und 8, welches durch die Kühlungsleitung 4 gespeist werden, gekühlt. Das Umhüllungsmaterial wirde über die Leitung 6 im Kreislauf geführt.

### Beispiele:

### 1) One-Shot-Technologie

Zum Einsatz kam eine standardmäßige Laborgießanlage (Versuchsanlage), die zum Gießen von Geleeartikel (Stärke, Pektin, Gelatine) sowie zum Herstellen von One-Shot-Produkten eingesetzt werden kann.

### Verwendete Rohwaren:

### Hülle:

Standard-Milchschokolade, 30°C Produkttemperatur beim Gießen

### Füllung:

a) Bananenpüree mit Aromen und 1% Kaliumsorbat versetzt (Viskosität 0,8 Pa.s)
b) Erdbeere passiert mit 3% Stärke kaltquellend, 1% Kaliumsorbat (zur Konservierung) und Aromen versetzt, 27°C Produkttemperatur beim Gießen (Viskosität ca. 1,1 Pa.s).

Es wurden Halbkugeln aus dem Material der Hülle und dem Material der Füllung hergestellt, welche zu Kugeln zusammengesetzt werden können. Die Versuche wurden mit einem Verhältnis von Hülle zu Füllung von 50:50 und 70:30 gefahren.

Es wurden Partikel mit einem Durchmesser von 12 mm (∼0,4g) bzw. 18 mm (∼0,9g) hergestellt. Die Schichtdicke der Schokoladeschicht betrug 1-2 mm.

### 2) Herstellung mit gefrorenem Material der Füllung

Zur Herstellung der gefrorenen Kerne wurde ein aseptisches Mangopüree (Viskosität bei Raumtemperatur: 0,3 Pa.s) verwendet.

Das Püree wurde mittels einer Pumpe auf die Oberfläche einer Kryotrommel getropft, wo dieses fror. Anschließend wurden die gebildeten Kerne abgeschabt und über einen Trichter gesammelt.

Die Temperatur der Kerne unmittelbar nach Produktion lag bei minus 40°C.

Zum Überziehen wurden 2 Arten von Bitterschokolade eingesetzt:
1. Eine halbsüße Bitterschokoladenkuvertüre
2. Eine Standard-Bitterschokoladenkuvertüre

Die produzierten Kerne wurden in noch tiefgefrorenem Zustand auf ein Gitterband aufgebracht und dort unmittelbar nach dem Aufbringen mit der Schokolade (Temperatur bei 78°C) besprüht. Optional wurde von unterhalb des Gitterbandes ebenfalls Schokolade mittels einer Walze aufgebracht.

Die überzogenen Partikel wurden über eine beheizte Walze auf ein zweites, tiefer liegendes Gitterband aufgebracht, wobei es zu einer Änderung in der Ausrichtung der Partikel kam. Auf dem zweiten Gitterband wurde ein zweiter Überziehschritt mit Schokolade, mittels eines Sprühsystems oder eines Schokoladevorhanges, durchgeführt. Die beschichteten Partikel, welche einen Durchmesser von ca. 8 mm und ein Gewicht von ca. 0,25 g aufwiesen, wurden auf ein Transportband übergeben, gekühlt und entweder in einen Vorratsbehälter überführt oder direkt in eine Fruchtzubereitung oder ein Milcherzeugnis eingebracht.

## Patentansprüche

1. Teilchenförmige Lebensmittelkomponente mit einer Füllung und einer Umhüllung, **dadurch gekennzeichnet, dass** die Füllung eine bei Raumtemperatur fließfähige Lebensmittelzubereitung ausgewählt aus der Gruppe bestehend aus Fruchtzubereitungen, sonstigen Zubereitungen, die aus der Gruppe bestehend aus Zubereitungen von Honig, Schalenobst, Kakao, Magerkakao, Schokolade, Kaffee und Vanille ausgewählt sind, und Mischungen daraus ist, dass die Umhüllung eine Schicht bestehend aus einer Komponente ausgewählt aus der Gruppe bestehend aus lebensmitteltauglichen Kakaoerzeugnissen, Schokoladeerzeugnissen und hydrophob wirkenden Lebensmittelzutaten, insbesondere gegebenenfalls aromatisierten und/oder gefärbten lebensmitteltauglichen Fetten oder fetthaltigen Materialien mit einem Fettgehalt von 80% oder mehr, bzw. Mischungen daraus aufweist, dass der durchschnittliche Teilchendurchmesser der im wesentlichen sphärischen Lebensmittelkomponente 6 bis 18 mm, bevorzugt 8 bis 11 mm beträgt, und dass die Lebensmittelkomponente im Wesentlichen in keimfreier Form vorliegt.

2. Lebensmittelkomponente gemäß Anspruch 1, **dadurch gekennzeichnet, dass** die Lebensmittelzubereitung eine Fruchtzubereitung ist, die aus der Gruppe bestehend aus Fruchtsäften, Fruchtsaftkonzentraten und gegebenenfalls passierten Fruchtpürees, insbesondere Bananenpüree, Waldbeerenpüree, Kokospüree, Mangopüree, passierten Erdbeeren und Mischungen daraus ausgewählt wird.

3. Lebensmittelkomponente gemäß einem der vorhergehenden Ansprüche, **dadurch gekennzeichnet, dass** die Lebensmittelzubereitung eine Viskosität bei Raumtemperatur von 0,1 Pa.s bis 100 Pa.s aufweist.

4. Lebensmittelkomponente gemäß einem der vorhergehenden Ansprüche, **dadurch gekennzeichnet, dass** die Füllung im Wesentlichen aus der Lebensmittelzubereitung besteht.

5. Lebensmittelkomponente gemäß Anspruch 4, **dadurch gekennzeichnet, dass** die Umhüllung aus einer einzigen Schicht besteht.

6. Lebensmittelkomponente gemäß Anspruch 4, **dadurch gekennzeichnet, dass** die Umhüllung zwei oder mehrere Schichten aus gegebenenfalls unterschiedlichen Komponenten aufweist.

7. Lebensmittelkomponente gemäß Anspruch 6, **dadurch gekennzeichnet, dass** die Umhüllung eine innere Schicht, die im Wesentlichen aus Kakaoerzeugnissen oder Schokoladeerzeugnissen besteht, und eine äußere Schicht, die im Wesentlichen aus lebensmitteltauglichen Fetten oder fetthaltigen Materialien besteht, aufweist.

8. Lebensmittel, welches eine teilchenförmige Lebensmittelkomponente gemäß einem der vorherigen Ansprüche enthält.

9. Lebensmittel gemäß Anspruch 8 in Form eines Produktes ausgewählt aus der Gruppe bestehend aus Milcherzeugnissen, insbesondere Joghurts, Topfencremen, Milchreis, Pudding und Molkeprodukten.

10. Verfahren zur Herstellung einer teilchenförmigen Lebensmittelkomponente gemäß einem der Ansprüche 1 bis 7, umfassend die Schritte
a) Verformen einer bei Raumtemperatur fließfähigen Lebensmittelzubereitung zur gewünschten Form einer Füllung und
b) Überziehen der geformten Lebensmittelzubereitung mit dem Material der Umhüllung,
wobei die Lebensmittelzubereitung vor dem Schritt b), gegebenenfalls gleichzeitig mit dem Schritt a) tiefgefroren wird.

11. Verfahren gemäß Anspruch 11 oder 12, **dadurch gekennzeichnet, dass** im Schritt b) das Material der Umhüllung durch eine oder mehrere der folgenden Varianten auf die geformte Lebensmittelzubereitung aufgebracht wird:
i) Aufsprühen auf die geformte Lebensmittelzubereitung
ii) Übergießen der geformten Lebensmittelzubereitung mit dem Material der Umhüllung
iii) Eintauchen der geformten Lebensmittelzubereitung in das Material der Umhüllung.

12. Verfahren gemäß einem der Ansprüche 10 oder 11, **dadurch gekennzeichnet, dass** der Schritt b) mehrfach durchgeführt wird.

13. Verfahren gemäß Anspruch 12, **dadurch gekennzeichnet, dass** die geformte Lebensmittelzubereitung zwischen zwei Schritten b) gewendet wird.

14. Verfahren gemäß einem der Ansprüche 10 bis 13, **dadurch gekennzeichnet, dass** im Schritt a) die Lebensmittelzubereitung auf eine gekühlte Fläche getropft wird und auf der Fläche unter Verfestigung tiefgefroren wird.

## Claims

1. Particulate food component comprising a filling and a coating, **characterised in that** the filling is a food preparation that is flowable at room temperature, selected from the group consisting of fruit preparations, other preparations selected from the group consisting of preparations of honey, nuts, cocoa, low-fat cocoa, chocolate, coffee and vanilla, and mixtures thereof, **in that** the coating comprises a layer consisting of a component selected from the group consisting of food-grade cocoa products, chocolate products and hydrophobically acting food ingredients, in particular optionally flavoured and/or coloured food-grade fats or fat-containing materials having a fat content of 80% or more, or mixtures thereof, **in that** the average particle diameter of the substantially spherical food component is from 6 to 18 mm, preferably 8 to 11 mm, and **in that** the food component is substantially germ-free.

2. Food component according to claim 1, **characterised in that** the food preparation is a fruit preparation, which is selected from the group consisting of fruit juices, fruit juice concentrates and optionally strained fruit puree, in particular banana puree, forest fruits puree, coconut puree, mango puree, strained strawberries and mixtures thereof.

3. Food component according to any of the preceding claims, **characterised in that** the food preparation has a viscosity of from 0.1 Pa·s to 100 Pa·s at room temperature.

4. Food component according to any of the preceding claims, **characterised in that** the filling consists substantially of the food preparation.

5. Food component according to claim 4, **characterised in that** the coating consists of a single layer.

6. Food component according to claim 4, **characterised in that** the coating comprises two or more layers of optionally different components.

7. Food component according to claim 6, **characterised in that** the coating comprises an inner layer which consists substantially of cocoa products or chocolate products and an outer layer which consists substantially of food-grade fats or fat-containing materials.

8. Food which contains a particulate food component according to any of the preceding claims.

9. Food according to claim 8 in the form of a product selected from the group consisting of milk products, in particular yoghurts, cottage cheese, rice pudding, custard and whey products.

10. Method for preparing a particulate food component according to any of claims 1 to 7, comprising the steps of:
a) shaping a food preparation that is flowable at room temperature into the desired shape of a filling; and
b) coating the shaped food preparation with the material of the coating,
wherein the food preparation is deep-frozen before step b), preferably at the same time as step a).

11. Method according to claim 10, **characterised in that**, in step b), the material of the coating is applied to the shaped food preparation by means of one or more of the following variants:
i) spraying onto the shaped food preparation;
ii) pouring over the shaped food preparation with the material of the coating;
iii) dipping the shaped food preparation into the material of the coating.

12. Method according to either claim 10 or claim 11, **characterised in that** step b) is carried out repeatedly.

13. Method according to claim 12, **characterised in that** the shaped food preparation is turned over between two instances of step b).

14. Method according to any of claims 10 to 13, **characterised in that**, in step a), the food preparation is dropped onto a cooled surface and deep-frozen on the surface to cause solidification.

## Revendications

1. Composant alimentaire particulaire, comprenant un fourrage et un enrobage, **caractérisé en ce que** le fourrage est une préparation alimentaire fluide à la température ambiante, choisie dans le groupe consistant en les préparations à base de fruits, les autres préparations, qui sont choisies dans le groupe consistant en les préparations de miel, de fruits à coques, de cacao, de cacao maigre, de chocolat, de café et de vanille, et les mélanges de ceux-ci ; que l'enrobage présente une couche constituée d'un composant choisi dans le groupe consistant en les produits de cacao à usage alimentaire, les produits de chocolat à usage alimentaire et les additifs alimentaires à effet hydrophobe, en particulier les graisses ou substances contenant des graisses, à usage alimentaire, éventuellement aromatisées et/ou colorées, présentant une teneur en graisses de 80 % ou plus, ou les mélanges de ceux-ci ; que la granulométrie moyenne du composant alimentaire essentiellement sphérique est de 6 à 18 mm, de préférence de 8 à 11 mm ; et que le composant alimentaire se présente pour l'essentiel sous forme stérile.

2. Composant alimentaire selon la revendication 1, **caractérisé en ce que** la préparation alimentaire est une préparation à base de fruits, qui est choisie dans le groupe consistant en les jus de fruits, les concentrés de jus de fruits et les purées de fruits éventuellement passées, en particulier la purée de banane, la purée de baies des bois, la purée de noix de coco, la purée de mangue, les fraises passées et les mélanges de ceux-ci.

3. Composant alimentaire selon l'une des revendications précédentes, **caractérisé en ce que** la préparation alimentaire présente une viscosité à la température ambiante de 0,1 Pa.s à 100 Pa.s.

4. Composant alimentaire selon l'une des revendications précédentes, **caractérisé en ce que** le fourrage est pour l'essentiel constitué de la préparation alimentaire.

5. Composant alimentaire selon la revendication 4, **caractérisé en ce que** l'enrobage est constitué d'une couche unique.

6. Composant alimentaire selon la revendication 4, **caractérisé en ce que** l'enrobage présente deux couches ou plus, constituées de composants éventuellement différents.

7. Composant alimentaire selon la revendication 6, **caractérisé en ce que** l'enrobage présente une couche intérieure, qui pour l'essentiel est constitué de produits de cacao ou de produits de chocolat, et une couche extérieure, qui pour l'essentiel est constituée de graisses ou de substances à base de graisses, à usage alimentaire.

8. Aliment qui contient un composant alimentaire particulaire selon l'une des revendications précédentes.

9. Aliment selon la revendication 8, sous forme d'un produit choisi dans le groupe consistant en les produits laitiers, en particulier les yaourts, les crèmes caillées, le riz au lait, le pudding et les produits à base de sérum.

10. Procédé de fabrication d'un composant alimentaire particulaire selon l'une des revendications 1 à 7, comprenant les étapes suivantes :
a) façonnage d'une préparation alimentaire fluide à la température ambiante, pour lui donner la forme souhaitée d'un fourrage, et
b) recouvrement de la préparation alimentaire façonnée, avec le matériau de l'enrobage, la préparation alimentaire étant congelée à basse température avant l'étape b), éventuellement en même temps que l'étape a).

11. Procédé selon la revendication 10, **caractérisé en ce que**, dans l'étape b), le matériau de l'enrobage est, par une ou plusieurs des variantes suivantes, appliqué sur la préparation alimentaire façonnée :
i) pulvérisation sur la préparation alimentaire façonnée,
ii) versement du matériau de l'enrobage sur la préparation alimentaire façonnée,
iii) immersion de la préparation alimentaire façonnée dans le matériau de l'enrobage.

12. Procédé selon l'une des revendications 10 ou 11, **caractérisé en ce que** l'étape b) est mise en oeuvre plusieurs fois.

13. Procédé selon la revendication 12, **caractérisé en ce que** la préparation alimentaire façonnée revient entre deux étapes b).

14. Procédé selon l'une des revendications 10 à 13, **caractérisé en ce que**, dans l'étape a), la préparation alimentaire est gouttée sur une surface refroidie, et est congelée à basse température sur la surface, avec solidification.
